# FASCICULE DE BREVET EUROPEEN

(11) **EP 3 844 405 B1**
(45) Date de publication et mention de la délivrance du brevet: **08.11.2023**
(21) Numéro de dépôt: 19769846.7
(22) Date de dépôt: 14.08.2019
(51) Int. Cl.: F16B 7/04, F16C 11/04

(54) **DISPOSITIF DE CONNEXION D'ELEMENTS TUBULAIRES**
VORRICHTUNG ZUM VERBINDEN VON ROHRFÖRMIGEN ELEMENTEN
DEVICE FOR CONNECTING TUBULAR ELEMENTS

(30) Priorité: 29.08.2018 FR 1857760
(43) Date de publication de la demande: 07.07.2021
(73) Titulaire: A. Raymond et Cie, 38000 Grenoble (FR)
(72) Inventeur: DAVID, Matthieu, 38170 SEYSSINET PARISET (FR); BIZZINI, Olivier, 38950 QUAIX-EN-CHARTREUSE (FR); HAMITOUCHE, Sébastien, 38470 VINAY (FR)
(74) Mandataire: IP Trust
(86) Numéro de dépôt international: PCT/FR2019/051925
(87) Numéro de publication internationale: WO 2020/043975

(56) Documents cités:
- WO-A1-2016/081973
- DE-A1- 3 320 385
- DE-A1- 4 206 402
- JP-A- 2001 245 425
- US-A- 1 740 740
- US-A- 2 676 044
- US-A1- 2002 037 193

## Description

### DOMAINE DE L'INVENTION

La présente invention concerne un dispositif de connexion d'éléments tubulaires. Elle trouve notamment son application dans le domaine des structures tubulaires en 3 dimensions, pour assembler et fixer entre eux des éléments tubulaires et réaliser une structure de forme prédéterminée.

### ARRIERE PLAN TECHNOLOGIQUE DE L'INVENTION

La formation d'une structure tubulaire en 3 dimensions nécessite l'utilisation de dispositifs de connexion pour assembler entre eux les éléments tubulaires constituant la structure.

On connaît de tels dispositifs de connexion des documents EP09641107 et US2015030388. Les dispositifs de connexion de ces documents comportent une noix d'assemblage formée de deux parties entre lesquelles on dispose les extrémités des éléments tubulaires que l'on souhaite assembler. Un tel dispositif de connexion présente l'avantage d'avoir un entraxe réduit entre les éléments tubulaires. Toutefois, ce type de dispositif ne permet aucune modification de l'orientation des éléments tubulaires entre eux, car ils sont maintenus fixement dans une position et une orientation fixée par la géométrie du dispositif de connexion. Un tel mouvement de rotation peut être souhaitable si l'on veut pouvoir réaliser des structures tubulaires de formes variées.

Les documents GB2119848, EP0590806, US8083432, US8960613, EP1751369, FR2986052, US2002037193, WO2016081973 et DE3320385 proposent des solutions adressant le problème du manque de mobilité des éléments tubulaires assemblés. Les dispositifs divulgués par ces documents sont généralement formés de deux parties, chaque partie permettant la fixation d'un élément tubulaire, les deux parties étant montées mobiles en rotation l'une par rapport à l'autre. Ces dispositifs permettent ainsi la rotation des éléments tubulaires l'un par rapport à l'autre via le mouvement relatif des deux parties du dispositif de connexion. Toutefois leur structure est complexe et leur assemblage nécessite l'emploi d'un outil.

On connaît du document FR2282566 un dispositif de connexion simple permettant la rotation des éléments tubulaires l'un par rapport à l'autre. Toutefois, dans ce dispositif de connexion, l'entraxe entre les éléments tubulaires est relativement important, ce qui constitue un inconvénient pour certains types de structures dans lesquelles un entraxe réduit est préférable.

### OBJET DE L'INVENTION

Un but de l'invention est de proposer un dispositif de connexion d'éléments tubulaires adressant tout ou partie des inconvénients de l'état de la technique. Elle vise notamment à fournir un dispositif de connexion simple, qui autorise la rotation des éléments tubulaires l'un par rapport à l'autre et qui permet d'avoir un entraxe réduit, voire minimal, entre les éléments tubulaires.

### BREVE DESCRIPTION DE L'INVENTION

En vue de la réalisation de ce but, l'objet de l'invention propose un dispositif de connexion d'éléments tubulaires comprenant un premier corps muni d'un premier logement de réception pour accueillir une portion longitudinale d'un premier élément tubulaire, et muni d'un premier organe de connexion; un deuxième corps muni d'un deuxième logement de réception pour accueillir une portion longitudinale d'un deuxième élément tubulaire, et muni d'un deuxième organe de connexion, le deuxième corps étant composé de deux demi-coques, comprenant chacune une portion du deuxième logement et une portion du deuxième organe de connexion. Le premier et le deuxième organe de connexion sont configurés pour maintenir assemblés le premier et le deuxième corps, en autorisant un mouvement de rotation entre eux selon un axe transverse normal au plan formé par une surface de contact entre le premier et le deuxième corps lorsqu'ils sont assemblés entre eux.

Selon l'invention, le premier corps et le deuxième corps présentent respectivement une première et une deuxième face de contour circulaire, correspondant à la surface de contact entre le premier et le deuxième corps lorsqu'ils sont assemblés entre eux, le premier et le deuxième organe de connexion étant respectivement disposés en périphérie de la première et de la deuxième face de contour circulaire.

Selon d'autres caractéristiques avantageuses et non limitatives de l'invention, prises seules ou selon toute combinaison techniquement réalisable :
- le premier logement et le deuxième logement débouchent respectivement sur la première et la deuxième face de contour circulaire pour former un logement unique lorsque le premier corps et le deuxième corps sont assemblés l'un à l'autre ;
- le premier organe de connexion et le deuxième organe de connexion comprennent une rainure annulaire et une nervure annulaire, la rainure et la nervure étant configurées pour coopérer entre elles ;
- chaque demi-coque comprend une moitié du deuxième logement ;
- les deux demi-coques sont munies chacune de moyens de guidage complémentaires, permettant de positionner les demi-coques l'une par rapport à l'autre ;
- les moyens de guidage comportent au moins un plot disposé sur l'une des demi-coques en vis-à-vis d'au moins un trou disposé sur l'autre demi-coque ;
- les deux demi-coques sont munies chacune de moyens de fixation pour solidariser les deux demi-coques ;
- les moyens de fixation comportent au moins un cran disposé sur l'une des demi-coques en vis-à-vis d'au moins une cavité disposée sur l'autre demi-coque ;
- les moyens de fixation comportent au moins une vis d'assemblage, au moins un premier perçage disposé sur l'une des demi-coques et au moins un deuxième perçage disposé sur l'autre demi-coque ;
- le premier et le deuxième perçage sont portés chacun par une oreille formée sur chacune des demi-coques ;
- le premier logement et/ou le deuxième logement comporte au moins une butée destinée à coopérer avec au moins une entretoise portée par le premier élément tubulaire et/ou le deuxième élément tubulaire.

### BREVE DESCRIPTION DES DESSINS

D'autres caractéristiques et avantages de l'invention ressortiront de la description détaillée de l'invention qui va suivre, en référence aux figures annexées sur lesquelles :
- la figure 1a représente une vue d'ensemble d'un dispositif de connexion d'éléments tubulaires conforme à l'invention ;
- la figure 1b représente une vue éclatée d'un dispositif de connexion d'éléments tubulaires conforme à l'invention
- la figure 2 représente une vue en coupe du dispositif de connexion d'éléments tubulaires conforme à l'invention;
- la figure 3 représente l'assemblage du premier élément tubulaire avec le premier corps ;
- la figure 4 l'assemblage du deuxième élément tubulaire avec une demi-coque ;
- la figure 5 représente l'assemblage d'une demi-coque au premier corps en présence du premier et deuxième élément tubulaire.

### DESCRIPTION DETAILLEE DE L'INVENTION

Par souci de simplification de la description à venir, les mêmes références sont utilisées pour des éléments identiques ou assurant la même fonction. Les figures sont des représentations schématiques qui, dans un objectif de lisibilité, ne sont pas à l'échelle.

### Présentation générale du dispositif de connexion

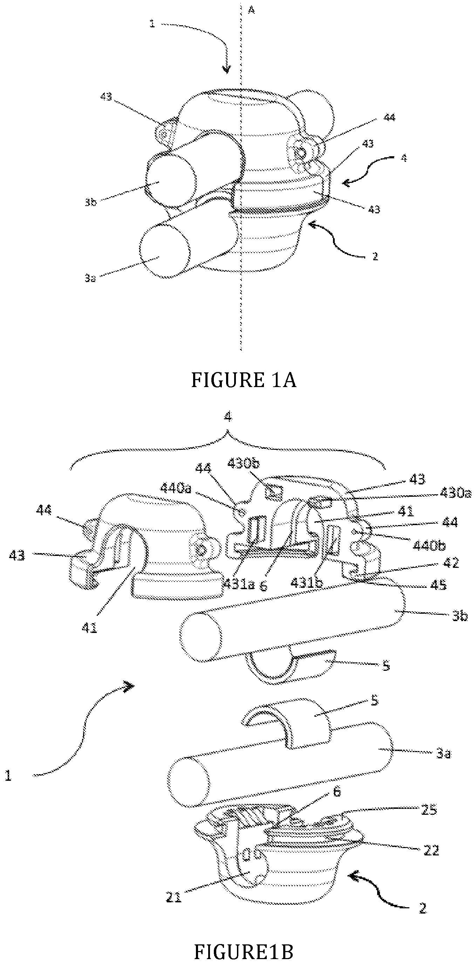

La figure 1a représente une vue d'ensemble du dispositif de connexion 1 conforme à l'invention et la figure 1b représente une vue d'ensemble éclatée du dispositif de connexion 1.

Le dispositif de connexion d'éléments tubulaires 1 est composé d'un premier corps 2, destiné à accueillir un premier élément tubulaire 3a, et d'un deuxième corps 4 formé de deux demi-coques 43, destiné à accueillir un deuxième élément tubulaire 3b. Le premier corps 2 et le deuxième corps 4 sont assemblés entre eux de sorte à pouvoir effectuer un mouvement de rotation l'un par rapport à l'autre selon un axe transverse A. Cet axe transverse A passe par le centre du premier 2 et du deuxième 4 corps et est normal au plan formé par la zone de contact entre le premier 2 et le deuxième 4 corps.

Le dispositif 1 vise à maintenir fixement le premier élément tubulaire 3a et le deuxième élément tubulaire 3b entre eux, tout en autorisant un mouvement de rotation de l'un par rapport à l'autre. Ce mouvement est obtenu par la rotation du premier corps 2 et/ou deuxième corps 4 qui accueillent, respectivement, le premier élément tubulaire 3a et le deuxième élément tubulaire 3b.

Les éléments tubulaires 3a, 3b peuvent être de natures très variées. Ils peuvent ainsi présenter un corps creux, et correspondre à des tuyaux ou des tubes, ou présenter un corps plein, et correspondre à des tiges. Ils peuvent présenter des sections de formes circulaires, rectangulaires, triangulaires ou autres. Les éléments tubulaires 3a, 3b peuvent également être composés de matériaux variés, tels qu'une matière plastique ou métallique. Ils ne sont pas nécessairement tous identiques.

De manière avantageuse, les matériaux du premier éléments tubulaire 3a et du deuxième élément tubulaire 3b sont des thermoplastiques qui ont des caractéristiques mécaniques importantes en termes de résistance. Le matériau utilisé peut aussi contenir des adjuvants tels que des fibres de verre pour le renforcer mécaniquement. Les éléments tubulaires 3a, 3b ne doivent pas nécessairement être composés du même matériau.

De manière également avantageuse, le premier corps 2 et/ou deuxième corps 4 peuvent comporter, sur leur surface externe, des cavités de formes variées afin de réduire la quantité de matière utilisée sans impacter le fonctionnement des corps.

### Description du dispositif de connexion

Le premier corps 2 est muni d'un premier logement de réception 21 et d'un premier organe de connexion 22. Le premier logement 21 traverse intégralement, de part en part, le premier corps 2 selon un premier axe longitudinal pour accueillir une portion longitudinale du premier élément tubulaire 3a. Le premier logement 21 a une forme et un diamètre adaptés au premier élément tubulaire 3a qu'il accueille.

Le deuxième corps 4 est muni d'un deuxième logement de réception 41 et d'un deuxième organe de connexion 42. Similairement au premier logement 21, le deuxième logement 41 traverse intégralement, de part en part, le deuxième corps 4 selon un deuxième axe longitudinal pour accueillir une portion longitudinale du deuxième élément tubulaire 3b et possède une forme et un diamètre adaptés au deuxième élément tubulaire 3b.

Le premier organe 22 et le deuxième organe 42 sont configurés pour maintenir assemblés le premier corps 2 et le deuxième corps 4, en autorisant un mouvement de rotation entre eux selon l'axe transverse A. Comme cela est visible sur les figures 1A, 2 et 5, le premier axe longitudinal et le deuxième axe longitudinal sont compris dans des plans parallèles entre eux et perpendiculaires à l'axe transverse A. Le dispositif de fixation permet donc d'assembler et d'orienter l'un par rapport à l'autre des éléments tubulaires 3a, 3b compris dans des plans parallèles.

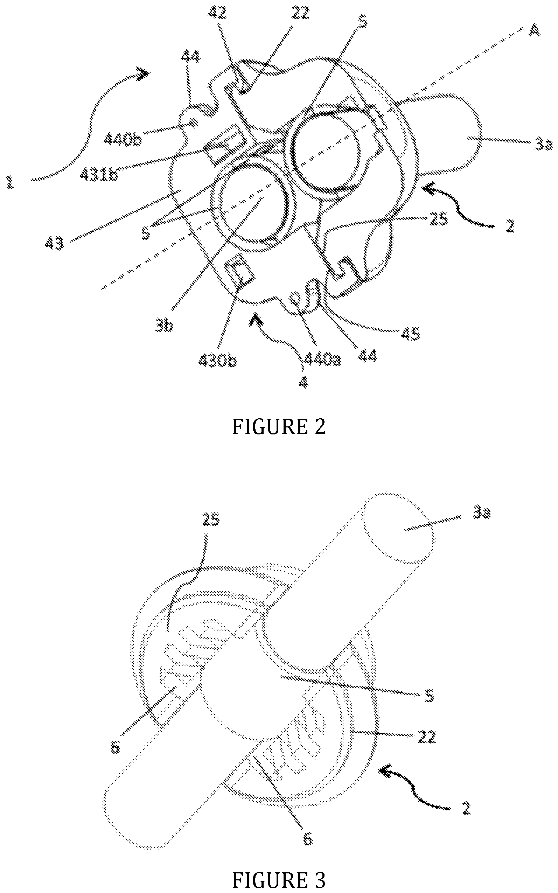

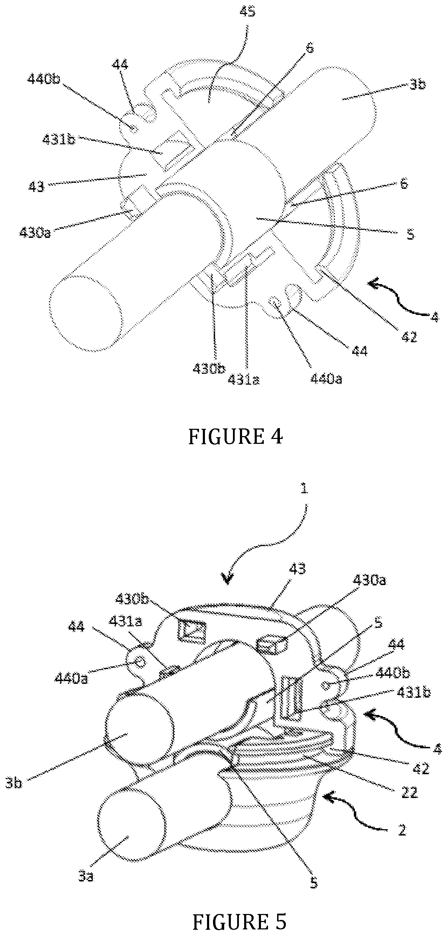

Le premier corps 2 et le deuxième corps 4 présentent, respectivement, une première face 25 et une deuxième face 45 dont les contours sont circulaires, comme cela est respectivement visible sur les figures 3 et 4. La première face 25 et la deuxième face 45 correspondent aux surfaces de contact entre le premier corps 2 et le deuxième corps 4 quand ils sont assemblés entre eux.

De manière avantageuse, le premier logement 21 et le deuxième logement 41 débouchent respectivement sur la première face 25 et de la deuxième face 45. La première face 25 et deuxième face 45 sont ainsi chacune constituées de deux parties distinctes, comme cela est bien visible sur les figures 3 et 4. Lorsque le premier corps 2 et le deuxième corps 4 sont assemblés l'un à l'autre, les deux logements 21, 41 sont mis en correspondance pour constituer un logement unique. Ce logement unique a pour avantage de réduire la distance séparant le premier élément tubulaire 3a du deuxième élément tubulaire 3b, de sorte à présenter un entraxe réduit, voire minimal (c'est-à-dire mettant en contact le premier et le deuxième élément tubulaire, tout en préservant suffisamment de jeu fonctionnel).

Dans l'exemple représenté sur les figures, le premier organe de connexion 22 et le deuxième organe de connexion 42 sont respectivement disposés en périphérie de la première face 25 et de la deuxième face 45. Par l'expression « en périphérie » on entend « sur le pourtour » des faces circulaires. Avantageusement, comme cela est illustré sur les figures 1 à 5, les organes de connexion 22 et 45 sont disposés sur toute la périphérie de la première face 25 et de la deuxième face 45 en dehors des zones occupées par les logements 21 et 41. Ils pourraient alternativement être disposés sur une partie seulement de la périphérie de la première face 25 et de la deuxième face 45 de manière à ne pas entraver la rotation entre le premier corps 2 et le deuxième corps 4.

De manière avantageuse, le premier organe de connexion 22 comprend au moins une rainure annulaire et le deuxième organe de connexion 42 comprend au moins une nervure annulaire, la rainure et la nervure étant configurées pour coopérer entre elles. On pourrait naturellement prévoir que le premier organe de connexion 22 comprenne une nervure annulaire, et que le deuxième organe de connexion comprenne une rainure annulaire. D'autres types de connexion qu'une nervure et une rainure sont également envisageables.

De manière préférentielle, la rainure annulaire 22 est située sur la surface extérieure du premier corps 2 et orientée vers l'extérieur du dispositif 1. Similairement, la nervure annulaire 42 est également disposée sur la surface extérieure du deuxième corps 4.

De manière avantageuse, et comme cela est bien visible sur la vue en coupe selon un plan transversal de la figure 2, la nervure annulaire 42 peut faire partie d'une rainure 420 formée sur la périphérie de la deuxième face de contour circulaire 45 et orientée vers l'intérieur de manière à pouvoir coopérer avec la rainure annulaire 22 du premier corps 2.

Les deux demi-coques 43, formant le deuxième corps 4, comprennent chacune une portion du deuxième logement 41 et une portion du deuxième organe de connexion 42. Elles sont ici formées de sorte à chacune constituer une moitié du deuxième corps 4. Plus spécifiquement, chaque demi-coque 43 comprend une portion du deuxième logement 41 respectivement située de part et d'autre d'un plan normal à la deuxième face 45 et passant par le deuxième axe longitudinal.

Afin de faciliter leur assemblage, les demi-coques 43 peuvent être munies de moyens de guidage complémentaires permettant de les positionner l'une par rapport à l'autre. Les demi-coques 43 peuvent également être munies de moyens de fixation.

De manière avantageuse, les moyens de guidage comportent au moins un plot 430a disposé sur l'une des demi-coques 43 en vis-à-vis d'au moins un trou 430b disposé sur l'autre demi-coque 43. Chaque demi-coque 43 peut être munie de plusieurs moyens de guidage, comme cela est représenté sur les figures 1b et 2. Ainsi chaque demi-coque 43 peut comporter un plot 430a et un trou 430b en vis-à-vis, respectivement, d'un trou 430b et d'un plot 430a disposé sur l'autre demi-coque 43. D'autres configurations sont naturellement possibles, le nombre et la répartition des plots 430a et des trous 430b entre les deux demi-coques 43 ne présentent pas d'importance particulière.

De manière alternative, notamment dans le cas où la surface externe du premier corps 2 et/ou deuxième corps 4 sont munies de cavités, les moyens de guidage de chaque demi-coque 43 comprennent une paire de crans ainsi qu'une paire d'ouvertures chacune dotée d'une butée pour accueillir un cran. De manière avantageuse, les crans d'une même paire ne sont pas orientés selon la même direction. Dans le cas où la surface du premier corps 2 et/ou deuxième corps 4 comprend des cavités, la paire d'ouvertures peut être formée sur le fond de cavités, ces cavités débouchant alors sur l'intérieur de la demi-coque 43. Lors de l'assemblage des deux demi-coques 43, chaque cran traverse et se clippe sur la butée de l'ouverture associée assurant ainsi la fixation des deux demi-coques 43 entre elles. Dans ce cas de figure, les moyens de guidages assurent également la fonction de fixation, ainsi tout ou partie des moyens de fixation décrits ci-après pourra être absent du dispositif de connexion.

Avantageusement, les moyens de fixation comportent au moins un cran 431a disposé sur l'une des demi-coques 43 en vis-à-vis d'au moins une cavité 431b disposée sur l'autre demi-coque 43. De manière similaire aux moyens de guidage, chaque demi-coque 43 peut être munie de plusieurs moyens de fixation, comme cela est représenté sur les figures 1b et 2. Ainsi chaque demi-coque 43 peut comporter un cran 431a et une cavité 431b en vis-à-vis, respectivement, d'une cavité 431b et d'un cran 431a disposé sur l'autre demi-coque 43. D'autres configurations sont naturellement possibles, le nombre et la répartition des crans 431a et des cavités 431b entre les deux demi-coques 43 ne présentent pas d'importance particulière.

De manière avantageuse, les moyens de fixation peuvent comporter, de façon alternative ou complémentaire au(x) cran(s) 431a et cavité (s) 432b, au moins une vis d'assemblage (non représentée sur les figures). Pour faciliter l'insertion de la vis, on pourra prévoir un premier perçage 440a disposé sur l'une des demi-coques 43 et un deuxième perçage 440b disposé en vis-à-vis sur l'autre demi-coque 43. Le premier perçage 440a peut présenter un diamètre plus important que celui du deuxième perçage 440b. Le premier perçage 440a peut présenter un diamètre supérieur ou égal à celui de la vis. Le deuxième perçage 440b peut présenter un diamètre inférieur à celui de la vis pour permettre son taraudage lors de la fixation de la vis.

Avantageusement, le premier perçage 440a et le deuxième perçage 440b sont portés chacun par une oreille 44 disposée en correspondance sur chacune des demi-coques 43. Avantageusement chaque demi-coque 43 comporte deux oreilles 44 sur sa surface extérieure diamétralement opposée l'une de l'autre tel que cela est visible sur les figures 1a, 1b et 2.

Pour empêcher les éléments tubulaires 3a, 3b de coulisser hors des logements 21, 41, on peut munir le dispositif de fixation 1 d'au moins une entretoise 5. Cette entretoise 5 peut être disposée sur une partie de la portion longitudinale de l'élément tubulaire 3a, 3b destinée à être placée dans le logement 21, 41. L'entretoise conduit à augmenter localement le diamètre de l'élément tubulaire 3a, 3b de manière à coopérer avec au moins une butée 6 du logement 21, 41. Avantageusement, le logement 21, 41 comporte deux butées 6, entre lesquelles la portion de l'élément tubulaire portant l'entretoise est placée, de sorte à bloquer ou limiter le mouvement de translation longitudinale de l'élément tubulaire 3a, 3b dans le dispositif de connexion 1.

Une entretoise 5 peut avoir été respectivement placée en un emplacement prédéterminé du premier et du deuxième élément tubulaire 3a, 3b, préalablement à la fixation du dispositif de connexion. On peut de la sorte positionner le dispositif de connexion 1 à cet emplacement prédéterminé du premier et du deuxième élément tubulaire 3a, 3b.

L'entretoise 5 peut être assemblée au premier et au deuxième élément tubulaire 3a, 3b par collage, par soudure ou par toute autre technique connue. L'entretoise peut être formée d'un matériau plastique ou métallique. L'entretoise 5 peut s'étendre longitudinalement sur toute la portion de l'élément tubulaire 3a, 3b destinée à être placée dans le logement 21, 41, ou sur une partie de cette portion seulement.

L'entretoise 5 peut être constituée d'une bague à emmancher sur l'élément tubulaire 3a, 3b. Il peut également s'agir d'une portion de bague, telle qu'une demi-bague comme cela est représenté sur les figures. Cette configuration peut être intéressante car elle permet de limiter la rotation de l'élément tubulaire 3a, 3b sur lui-même dans le logement 21, 41, les extrémités de la portion de la bague pouvant entrer en contact avec des butées complémentaires ou les parois du logement 21, 41.

### Mise en oeuvre du dispositif de connexion

Dans une première étape, représentée sur la figure 3, on assemble le premier élément tubulaire 3a au premier corps 2. Une portion longitudinale du premier élément tubulaire 3a, est placée dans le premier logement 21.

Dans une deuxième étape, représentée sur la figure 4, on assemble similairement le deuxième élément tubulaire 3b à une demi-coque 43. Une portion longitudinale du deuxième élément tubulaire 3b est placée dans la partie du deuxième logement 42 comprise dans la demi-coque 43.

Dans une troisième étape, représentée sur la figure 5, la demi-coque 43 équipée du deuxième élément tubulaire 3b est assemblée au premier corps 2 muni du premier élément tubulaire 3a en insérant la nervure 42 de la demi-coque 43 dans la rainure 22 du premier corps 2. Cela peut par exemple être réalisé en alignant dans le même plan la première face de contour circulaire 25 et la deuxième face de contour circulaire 45 portée par la demi-coque 43, puis en translatant la demi-coque 43 et le premier corps 2 l'un vers l'autre pour faire coopérer la rainure 22 avec la nervure 42.

Dans une quatrième et dernière étape, représentée sur la figure 1a, la demi-coque 43 restante (non équipée du deuxième élément 3b) est assemblée à l'autre demi-coque 43 en venant faire coïncider la nervure 42 portée par la demi-coque 43 restante avec la rainure 22. Les deux demi-coques 43 sont correctement alignées entre elles grâce au guidage de la nervure 42 dans la rainure 22 mais aussi grâce aux éléments de guidage disposés sur chaque demi-coque 43. Pour assurer l'assemblage des deux demi-coques 43 entre elles, une pression selon le deuxième axe longitudinal est effectuée sur la surface des deux demi-coques 43 de sorte à verrouiller les moyens de fixation. La vis d'assemblage, lorsqu'elle est prévue, est ensuite insérée à travers le premier perçage 440a puis vissée dans le deuxième perçage 400b.

L'invention présente ainsi l'avantage d'avoir un montage simple, qui ne nécessite pas d'appliquer des efforts d'assemblage important ni obligatoirement l'emploi d'un outil. Les éléments tubulaires sont néanmoins maintenus fermement entre eux. On rappelle de plus que grâce aux organes de guidage 22 et 42 le premier 3a et le deuxième 3b élément tubulaire peuvent tourner l'un par rapport à l'autre en rotation d'axe transverse A. Le dispositif de connexion conforme à l'invention peut présenter un entraxe réduit, voire minimal, par la présence d'un logement unique composé du premier logement 21 et deuxième logement 41, permettant la mise en contact des éléments tubulaires.

Bien entendu l'invention n'est pas limitée au mode de mise en oeuvre décrit et on peut y apporter des variantes de réalisation sans sortir du cadre de l'invention tel que défini par les revendications.

On rappelle notamment que par « élément tubulaire » on désigne dans le cadre de la présente invention tout élément de forme allongée, susceptible de former un élément d'une structure. Cet élément peut être plein ou creux, et présenter une section de forme quelconque.

## Revendications

1. Dispositif de connexion d'éléments tubulaires (1) comprenant :
• Un premier corps (2) muni d'un premier logement de réception (21) pour accueillir une portion longitudinale d'un premier élément tubulaire (3a), et muni d'un premier organe de connexion (22);
• Un deuxième corps (4) muni d'un deuxième logement de réception (41) pour accueillir une portion longitudinale d'un deuxième élément tubulaire (3b), et muni d'un deuxième organe de connexion (42), le deuxième corps (4) étant composé de deux demi-parties (43) comprenant chacune une portion du deuxième logement (41) et une portion du deuxième organe de connexion (42); le premier (22) et le deuxième (42) organe de connexion étant configurés pour maintenir assemblés le premier (2) et le deuxième (4) corps, en autorisant un mouvement de rotation entre eux selon un axe transverse (A) normal au plan formé par une surface de contact entre le premier (2) et le deuxième corps (3) lorsqu'ils sont assemblés entre eux ;
le dispositif (1) étant **caractérisé en ce que** le les demi-parties représentent des demi-coques (43) et **en ce que** le premier corps (2) et le deuxième corps (4) présentent respectivement une première (25) et une deuxième (45) face de contour circulaire correspondant à la surface de contact entre le premier (2) et le deuxième corps (3) lorsqu'ils sont assemblés entre eux, le premier (22) et le deuxième (42) organe de connexion étant respectivement disposés en périphérie de la première (25) et de la deuxième (45) face de contour circulaire.

2. Dispositif de connexion d'éléments tubulaires (1) selon la revendication précédente dans lequel le premier logement (21) et le deuxième logement (41) débouchent respectivement sur la première (25) et la deuxième (45) face de contour circulaire pour former un logement unique lorsque le premier corps (2) et le deuxième corps (4) sont assemblés l'un à l'autre.

3. Dispositif de connexion d'éléments tubulaires (1) selon l'une des revendications précédentes dans lequel le premier organe de connexion (22) et le deuxième organe de connexion (42) comprennent une rainure annulaire et une nervure annulaire, la rainure et la nervure étant configurées pour coopérer entre elles.

4. Dispositif de connexion d'éléments tubulaires (1) selon l'une des revendications précédentes dans lequel chaque demi-coque (43) comprend une moitié du deuxième logement (41).

5. Dispositif de connexion d'éléments tubulaires (1) selon l'une des revendications précédentes dans lequel les deux demi-coques (43) sont munies chacune de moyens de guidage (430a, 430b) complémentaires, permettant de positionner les demi-coques (43) l'une par rapport à l'autre.

6. Dispositif de connexion d'éléments tubulaires (1) selon la revendication précédente dans lequel les moyens de guidage (430a, 430b) comportent au moins un plot (430a) disposé sur l'une des demi-coques (43) en vis-à-vis d'au moins un trou (430b) disposé sur l'autre demi-coque (43).

7. Dispositif de connexion d'éléments tubulaires (1) selon l'une des revendications précédentes dans lequel les deux demi-coques (43) sont munies chacune de moyens de fixation (431a, 431b, 440a, 440b) pour solidariser les deux demi-coques (43).

8. Dispositif de connexion d'éléments tubulaires (1) selon la revendication précédente dans lequel les moyens de fixation (431a, 431b, 440a, 440b) comportent au moins un cran (431a) disposé sur l'une des demi-coques (43) en vis-à-vis d'au moins une cavité (431b) disposée sur l'autre demi-coque (43).

9. Dispositif de connexion d'éléments tubulaires (1) selon l'une des revendications 7 et 8 dans lequel les moyens de fixation (431a, 431b, 440a, 440b) comportent au moins une vis d'assemblage, au moins un premier perçage (440a) disposé sur l'une des demi-coques (43) et au moins un deuxième perçage (440b) disposé sur l'autre demi-coque (43).

10. Dispositif de connexion d'éléments tubulaires (1) selon la revendication précédente dans lequel le premier (440a) et le deuxième (440b) perçage sont portés chacun par une oreille (44) formée sur chacune des demi-coques (43).

11. Dispositif de connexion d'éléments tubulaires (1) selon l'une des revendications précédentes dans lequel le premier logement (21) et/ou le deuxième logement (41) comporte au moins une butée (6) destinée à coopérer avec au moins une entretoise (5) portée par le premier élément tubulaire (3a) et/ou le deuxième élément tubulaire (3b).

## Patentansprüche

1. Vorrichtung (1) zum Verbinden von rohrförmigen Elementen, umfassend:
• einen ersten Körper (2), der mit einem ersten Aufnahmegehäuse (21) zum Unterbringen eines Längsabschnitts eines ersten rohrförmigen Elements (3a) versehen ist und mit einem ersten Verbindungsglied (22) versehen ist;
• einen zweiten Körper (4), der mit einem zweiten Aufnahmegehäuse (41) zum Unterbringen eines Längsabschnitts eines zweiten rohrförmigen Elements (3b) versehen ist und mit einem zweiten Verbindungsglied (42) versehen ist, wobei der zweite Körper (4) aus zwei Halbteilen (43) besteht, umfassend jeweils einen Abschnitt des zweiten Gehäuses (41) und einen Abschnitt des zweiten Verbindungsglieds (42), wobei das erste (22) und das zweite Verbindungsglied (42) zum Zusammenhalten des ersten (2) und des zweiten (4) Körpers konfiguriert sind, indem eine Drehbewegung zwischen ihnen um eine Querachse (A) herum senkrecht zu der Ebene zugelassen wird, die durch eine Kontaktoberfläche zwischen dem ersten (2) und dem zweiten Körper (3) ausgebildet wird, wenn sie zusammengebaut sind;
wobei die Vorrichtung (1) **dadurch gekennzeichnet ist, dass** die Halbteile Halbschalen (43) darstellen und **dass** der erste Körper (2) und der zweite Körper (4) jeweils eine erste (25) und eine zweite Fläche (45) mit kreisförmigem Umriss vorweisen, die der Kontaktoberfläche zwischen dem ersten (2) und dem zweiten Körper (3) entsprechen, wenn sie zusammengebaut sind, wobei das erste (22) und das zweite Verbindungsglied (42) jeweils an einem Umfang der ersten (25) und der zweiten (45) Fläche mit kreisförmigem Umriss angeordnet sind.

2. Vorrichtung (1) zum Verbinden von rohrförmigen Elementen nach dem vorstehenden Anspruch, wobei das erste Gehäuse (21) und das zweite Gehäuse (41) jeweils an der ersten (25) und der zweiten (45) Fläche mit kreisförmigem Umriss zum Ausbilden eines einzigen Gehäuses münden, wenn der erste Körper (2) und der zweite Körper (4) miteinander zusammengebaut sind.

3. Vorrichtung (1) zum Verbinden von rohrförmigen Elementen nach einem der vorstehenden Ansprüche, wobei das erste Verbindungsglied (22) und das zweite Verbindungsglied (42) eine ringförmige Nut und eine ringförmige Rippe umfassen, wobei die Nut und die Rippe zum miteinander Zusammenwirken konfiguriert sind.

4. Vorrichtung (1) zum Verbinden von rohrförmigen Elementen nach einem der vorstehenden Ansprüche, wobei jede Halbschale (43) eine Hälfte des zweiten Gehäuses (41) umfasst.

5. Vorrichtung (1) zum Verbinden von rohrförmigen Elementen nach einem der vorstehenden Ansprüche, wobei die zwei Halbschalen (43) jeweils mit komplementären Führungsmitteln (430a, 430b) versehen sind, um es zu ermöglichen, die Halbschalen (43) relativ zueinander zu positionieren.

6. Vorrichtung (1) zum Verbinden von rohrförmigen Elementen nach dem vorstehenden Anspruch, wobei die Führungsmittel (430a, 430b) mindestens einen Stift (430a) aufweisen, der auf einer der Halbschalen (43) gegenüber mindestens einem Loch (430b) angeordnet ist, das auf der anderen Halbschale (43) angeordnet ist.

7. Vorrichtung (1) zum Verbinden von rohrförmigen Elementen nach einem der vorstehenden Ansprüche, wobei die zwei Halbschalen (43) jeweils mit Befestigungsmitteln (431a, 431b, 440a, 440b) zum festen Verbinden der zwei Halbschalen (43) versehen sind.

8. Vorrichtung (1) zum Verbinden von rohrförmigen Elementen nach dem vorstehenden Anspruch, wobei die Befestigungsmittel (431a, 431b, 440a, 440b) mindestens eine Einkerbung (431a) aufweisen, die auf einer der Halbschalen (43) gegenüber mindestens einem Hohlraum (431b) angeordnet ist, der auf der anderen Halbschale (43) angeordnet ist.

9. Vorrichtung (1) zum Verbinden von rohrförmigen Elementen nach einem der Ansprüche 7 und 8, wobei die Befestigungsmittel (431a, 431b, 440a, 440b) mindestens eine Zusammenbauschraube, mindestens eine erste Durchbohrung (440a), die auf einer der Halbschalen (43) angeordnet ist, und mindestens eine zweite Durchbohrung (440b) aufweisen, die auf der anderen Halbschale (43) angeordnet ist.

10. Vorrichtung (1) zum Verbinden von rohrförmigen Elementen nach dem vorstehenden Anspruch, wobei die erste (440a) und der zweite (440b) Durchbohrung jeweils durch ein Öhr (44) getragen werden, das auf jeder der Halbschalen (43) ausgebildet ist.

11. Vorrichtung (1) zum Verbinden von rohrförmigen Elementen nach einem der vorstehenden Ansprüche, wobei das erste Gehäuse (21) und/oder das zweite Gehäuse (41) mindestens einen Anschlag (6) aufweist, der dafür bestimmt ist, mit mindestens einem Abstandshalter (5) zusammenzuwirken, der durch das erste rohrförmige Element (3a) und/oder das zweite rohrförmige Element (3b) getragen wird.

## Claims

1. Device for connecting tubular elements (1), comprising:
• a first body (2) which is provided with a first reception housing (21) for accommodating a longitudinal portion of a first tubular element (3a) and is provided with a first connection component (22);
• a second body (4) which is provided with a second reception housing (41) for accommodating a longitudinal portion of a second tubular element (3b) and is provided with a second connection component (42), the second body (4) being formed by two halves (43) each comprising a portion of the second housing (41) and a portion of the second connection component (42); the first connection component (22) and the second connection component (42) being configured in order to keep the first body (2) and the second body (4) assembled, while allowing a rotational movement between them along a transverse axis (A) which is normal to the plane formed by a contact surface between the first body (2) and the second body (3) when they are assembled;
the device (1) being **characterized in that** the halves represent half-shells (43) and **in that** the first body (2) and the second body (4) each have a first face (25) and a second face (45) having a circular contour corresponding to the contact surface between the first body (2) and the second body (3) when assembled, the first connection component (22) and the second connection component (42) each being arranged at the periphery of the first face (25) and second face (45) having a circular contour.

2. Device for connecting tubular elements (1) according to the preceding claim, wherein the first housing (21) and the second housing (41) each open out on the first face (25) and the second face (45) having a circular contour to form a single housing when the first body (2) and the second body (4) are assembled.

3. Device for connecting tubular elements (1) according to either of the preceding claims, wherein the first connection component (22) and the second connection component (42) comprise an annular groove and an annular rib, the groove and the rib being configured to engage with one another.

4. Device for connecting tubular elements (1) according to any of the preceding claims, wherein each half-shell (43) comprises one half of the second housing (41).

5. Device for connecting tubular elements (1) according to any of the preceding claims, wherein the two half-shells (43) are each provided with complementary guide means (430a, 430b), making it possible to position the half-shells (43) relative to one another.

6. Device for connecting tubular elements (1) according to the preceding claim, wherein the guide means (430a, 430b) comprise at least one stud (430a) arranged on one of the half-shells (43) facing at least one hole (430b) arranged on the other half-shell (43).

7. Device for connecting tubular elements (1) according to any of the preceding claims, wherein the two half-shells (43) are each provided with attaching means (431a, 431b, 440a, 440b) for securing the two half-shells (43).

8. Device for connecting tubular elements (1) according to the preceding claim, wherein the attaching means (431a, 431b, 440a, 440b) comprise at least one notch (431a) arranged on one of the half-shells (43) facing at least one cavity (431b) arranged on the other half-shell (43).

9. Device for connecting tubular elements (1) according to either claim 7 or claim 8, wherein the attaching means (431a, 431b, 440a, 440b) comprise at least one assembly screw, at least one first borehole (440a) arranged on one of the half-shells (43) and at least one second borehole (440b) arranged on the other half-shell (43).

10. Device for connecting tubular elements (1) according to the preceding claim, wherein the first borehole (440a) and the second borehole (440b) are each supported by a lug (44) formed on each of the half-shells (43).

11. Device for connecting tubular elements (1) according to any of the preceding claims, wherein the first housing (21) and/or the second housing (41) comprises at least one stop (6) intended to engage with at least one spacer (5) supported by the first tubular element (3a) and/or the second tubular element (3b).
